# EUROPÄISCHE PATENTSCHRIFT

(11) **EP 0 927 981 B1**
(45) Veröffentlichungstag und Bekanntmachung des Hinweises auf die Patenterteilung: **22.10.2003**
(21) Anmeldenummer: 99200017.4
(22) Anmeldetag: 04.01.1999
(51) Int. Cl.: G08B 26/00

(54) **Anordnung zum Übertragen von Daten und/oder Energie mit Trenneinheit**
Arrangement for data and/or energy transmission with separation unit
Dispositif pour la transmission des données et/ou de l'énergie avec unité séparatrice

(30) Priorität: 02.01.1998 DE 9800049 U
(43) Veröffentlichungstag der Anmeldung: 07.07.1999
(73) Patentinhaber: Philips Intellectual Property & Standards GmbH, 20099 Hamburg (DE); Koninklijke Philips Electronics N.V., 5621 BA Eindhoven (NL)
(72) Erfinder: Bühring, Peter, Röntgenstrasse 24, 22335 Hamburg (DE); Jöhnk, Egon, Röntgenstrasse 24, 22335 Hamburg (DE)
(74) Vertreter: Peters, Carl Heinrich, Dipl.-Ing.

(56) Entgegenhaltungen:
- EP-A- 0 468 097
- EP-A- 0 532 787
- EP-A- 0 626 743
- GB-A- 2 168 517
- US-A- 4 603 318

## Beschreibung

Die Erfindung betrifft eine Anordnung zum Übertragen von Daten und/oder Energie über Leiter, von denen wenigstens ein Leiter durch wenigstens eine Trenneinheit in einen ersten und einen zweiten Leiterabschnitt unterteilt ist, wobei jede Trenneinheit wenigstens eine Überwachungseinheit enthält.

Wenn in einem System, in dem Daten und/oder Energie über zwei Leitungen an mehrere Stationen übertragen werden, Kurzschlüsse zwischen den beiden Leitungen oder in den angeschlossenen Stationen auftreten, kann eine Übertragung weder von Daten noch von Energie stattfinden, und die speisende Quelle wird unzumutbar belastet.

Aus EP 0 626 743 A2 ist ein System bekannt, mit dem in einem Zweileiter-Ringsystem mit Hilfe von unterschiedlichen Kurzschlußschaltern Trennschalter gesteuert werden. Bei Auftreten eines Kurzschlusses wird die entsprechende Leitung durch Trennschalter in Überwachungseinheiten unterbrochen. Der restliche, hinter dem Kurzschluß liegende Teil des Systems wird durch Umschalter in den Anfangs- und Endüberwachungseinheiten von der anderen Seite, an der die zwei Leiter wieder in der Anfangs- und Endüberwachungseinheit ankommen, mit Spannung versorgt. Da zwischen zwei Überwachungseinheiten mindestens ein Verbraucher angeordnet sein muß, werden im Kurzschlußfall mindestens dieser und möglicherweise auch mehrere, zwischen den Überwachungseinheiten angeordnete Verbraucher abgeschaltet. Die Leitungen werden jedoch nur während des Einschaltens auf Kurzschlüsse überprüft. Außerdem ist dieses System nur für Gleichspannung ausgelegt.

In der WO-A-92/10018 werden Leitungen mit Strom- und Spannungssensoren abgetastet, und ein Controller wertet die ermittelten Werte aus und unterbricht diese Leitungen mit Halbleiterschaltern bei Überschreiten einer Schwellspannung. Wenn diese Leitungen bei Fehlfunktion der Schalter nicht unterbrochen werden, wird vom Controller eine Hauptsicherung geöffnet. Dieses System dient neben der Entlastung der treibenden Quelle vor allem der Vermeidung von Lichtbögen bei mechanisch schaltenden Sicherungen.

Der Erfindung liegt die Aufgabe zugrunde, in einer Anordnung zum Übertragen von Daten und/oder Energie mit Trenneinheiten Kurzschlüsse und Überlastungen zu erkennen und die betroffenen Leiterabschnitte so abzukoppeln, daß die treibende Quelle nicht überlastet wird, restliche Leiterabschnitte funktionsfähig bleiben und somit eine sichere Daten- und Energieübertragung in offenen Netzen realisierbar ist.

Erfindungsgemäß wird diese Aufgabe dadurch gelöst, daß die Überwachungseinheit an wenigstens einen Leiterabschnitt angeschlossen ist und eingerichtet ist, einen Schalter zu betätigen, wenn auf wenigstens einem der angeschlossenen Leiterabschnitte eine Spannung eine erste Ansprechschwelle unterschreitet oder eine zweite Ansprechschwelle überschreitet, und daß der Schalter durch ein strombegrenzendes Element überbrückt ist.

Es sind Trenneinheiten vorgesehen, die je aus wenigstens einer Überwachungseinheit und einem Schalter bestehen, wobei die Überwachungseinheit den Schalter in den Leitern so steuert, daß im Kurzschluß- oder Überlastungsfall der Schalter geöffnet wird. Der Kurzschluß- oder Überlastungsfall wird durch eine oder mehrere in Reihe geschaltete Überwachungseinheiten festgestellt. Der Schalter ist in einen Leiter eingefügt und wird von der Überwachungseinheit so angesteuert, daß er leitet, wenn kein Kurzschluß vorliegt. Stellt die Überwachungseinheit einen Kurzschluß oder eine Überlastung fest, wird der Schalter geöffnet. Der Schalter ist mit einem strombegrenzenden Element überbrückt. Damit wird das Potential hochohmig auf den Leiterabschnitt hinter der Trenneinheit übertragen. Anhand dieses Potentials steuert die Überwachungseinheit den Schalter in der Trenneinheit. Wenn ein Kurzschluß oder eine Überlastung aufgehoben wird, wird der Schalter automatisch durch die Überwachungseinheit geschlossen. Ist das Leitungssystem als Ringsystem aufgebaut, kann es von beiden Seiten mit Spannung versorgt werden. Da eine Überwachungseinheit das Potential jeweils hinter der Trenneinheit überprüft, werden mehrere in Reihe geschaltete Überwachungseinheiten eingesetzt, die das Potential an jeder Seite des Schalters überprüfen. Dadurch ist die Trenneinheit bidirektional betreibbar, d.h. Eingang und Ausgang der Trenneinheit lassen sich vertauschen. Das Leitungssystem kann mit Gleichspannung oder Wechselspannung betrieben werden. Die Ansprechschwellen, mit der die Überwachungseinheiten die Potentiale auf den angeschlossenen Leitungsabschnitten überprüfen, können mit einer Hysterese gesteuert werden. Dabei ist die erste Ansprechschwelle, die vorliegen muß, um den Schalter zu öffnen, niedriger als die zweite Ansprechschwelle, die erreicht werden muß, um den Schalter der Trenneinheit zu schließen.

Im einfachsten Fall wird dieses Zweileitersystem nur von einer Seite mit Gleichspannung betrieben. Dann besteht der Schalter aus nur einem Feldeffekt-Leistungstransistor, der von der Überwachungseinheit gesteuert wird. Das Gate des Feldeffekt-Leistungstransistor ist mit einem Steuertransistor der Überwachungseinheit gekoppelt. Der Steuertransistor ist vorzugsweise ein Feldeffekttransistor. Da das Zweileitersystem nur von einer Seite mit Gleichspannung betrieben wird, wird das Potential auf dem unterteilten Leiterabschnitt nur hinter dem Schalter überprüft. Das Gate des Steuertransistors in der Überwachungseinheit ist mit diesem Leiterabschnitt verbunden. Übersteigt das Potential auf diesem Leiterabschnitt die zweite Ansprechschwelle, wird der Steuertransistor der Überwachungseinheit leitend, und stellt dadurch die Verbindung zum nicht unterteilten Leiter her. Damit wird das Potential des nicht unterteilten Leiters auf das Gate des Feldeffekt-Leistungstransistor im Schalter durchgeschaltet, der dadurch leitend wird. Fällt das Potential auf dem überwachten Leiterabschnitt unter die erste Ansprechschwelle bleibt der Steuertransistor nichtleitend und der Feldeffekt-Leistungstransistor im Schalter auch. Damit ist der Generator vom Kurzschluß durch den geöffneten Schalter abgetrennt.

Läßt sich das Leitersystem von beiden Seiten mit Spannung versorgen, werden zwei Überwachungseinheiten eingesetzt, da Eingang und Ausgang des Trennschalters jetzt vertauschbar sind. In diesem Fall besteht der Schalter aus zwei Feldeffekt-Leistungstransistoren mit gleichem Leitungstyp, deren Sources miteinander verbunden sind. Auch deren Gates sind miteinander verbunden, und mit einem Steuertransistor einer Überwachungseinheit gekoppelt. Die Überwachungseinheiten überprüfen die angeschlossenen Leiterabschnitte des vom Schalter unterteilten Leiters. Dazu werden die Steuertransistoren jeweils mit dem Potential eines angeschlossenen Leiterabschnitte angesteuert. Die Überwachungseinheiten sind mit ihren Steuertransistoren in Reihe geschaltet. Diese beiden Steuertransistoren stellen die Verbindung zum zweiten Leiter her, der im Normalbetrieb ein anderes Potential hat als der Leiter, in den der Schalter mit den Leistungstransistoren eingefügt ist. Wenn der Steuertransistor leitet, werden die Gates der Leistungstransistoren über einen Spannungsteiler mit einem Potential angesteuert, welches die Leistungstransistoren im Schalter in einen leitenden Zustand versetzt. Die Steuertransistoren der Überwachungseinheiten haben einen entgegengesetzten Leitungstyp als die Leistungstransistoren im Schalter. Übersteigt das Potential auf den angeschlossenen Leiterabschnitten des unterteilten Leiters die zweite Ansprechschwelle, die über der Schwellspannung der Steuertransistoren der Überwachungseinheiten liegt, werden diese leitend und verbinden den nicht unterbrochenen Leiter mit den Gates der Leistungstransistoren im Schalter. Wenn eine Verbindung über die in Reihe geschalteten Steuertransistoren hergestellt ist, werden die Leistungstransistoren im Schalter leitend und schließen den Schalter. Im Kurzschluß- oder Überlastungsfall fällt das Potential auf wenigsten einem angeschlossenen Leiterabschnitt unter die erste Ansprechschwelle, so daß die Steuertransistoren der Überwachungseinheit und somit auch die Leistungstransistoren des zu steuernden Schalters nichtleitend werden und dadurch der Leiter unterbrochen wird und der kurzgeschlossene Leiterabschnitt wirksam vom übrigen funktionierenden Teil des Leitersystem abgetrennt wird.

Das strombegrenzende Element, welches den Schalter überbrückt, ist ein hochohmiger Widerstand oder eine steuerbare Widerstandskombination und wird im folgenden als Prüfwiderstand bezeichnet. Über diesen Prüfwiderstand wird das Potential hochohmig an den Ausgang der Trenneinheit übertragen. Liegt jetzt bei geöffnetem Schalter kein Kurzschluß vor, kann sich ein Potential über der zweiten Ansprechschwelle aufbauen, und der Schalter wird geschlossen. Ist der Schalter geschlossen und ein Kurzschluß tritt auf, fällt das Potential unter den erforderlichen Wert und der Schalter wird geöffnet. Wird der Kurzschluß behoben, wobei der Schalter geöffnet ist, entsteht über den Prüfwiderstand ein zum Schließen des Schalters erforderliches Potential und der Schalter wird automatisch geschlossen.

Die Trenneinheit ist mit Erweiterungen neben Gleichspannungsbetrieb auch für Wechselstrom einsetzbar. Für den Betrieb mit Wechselspannung wird der Schalter mit Speicherelementen ergänzt. Diese Speicherelemente sind vorzugsweise Kapazitäten, die beispielsweise in der positiven Halbwelle aufgeladen werden und die notwendige Energie, um den Schalter auch in der negativen Halbwelle geschlossen zu halten, speichern. Diese Kapazität ist zwischen dem Verbindungspunkt der beiden Sources der Leistungstransistoren des Schalters und dem Verbindungspunkt der zusammengeschalteten Gates der Leistungstransistoren eingefügt. Treten Kurzschlüsse nur während der Halbwelle auf, in der der Schalter durch die gespeicherte Ladung des Kondensators geschlossen wird, werden diese nicht erkannt. Deshalb wird durch Erweiterungen erreicht, daß die Trenneinheit Kurzschlüsse auch in der zweiten Halbwelle erkennt. Diese Erweiterungen sind mehrere Feldeffekttransistoren und Widerstände, eine Diode und ein Speicherelement. Dieses Speicherelement wird bei Kurzschluß in der zweiten der Wechselspannung nicht aufgeladen, so daß der Steuertransistor der Überwachungseinheit in keiner Halbwelle leitend ist und dadurch auch die Kapazität im Schalter nicht aufgeladen wird.

Die Leitfähigkeit der Leistungstransistoren im Schalter legt fest, in welcher Halbwelle Kurzschlüsse erkannt werden.

Ebenfalls kann die Überwachungseinheit bei geschlossenem Schalter zu jedem Zeitpunkt den Zustand der Energie- oder Datenübertragung am Ausgang der Trenneinheit prüfen und bei einem auftretenden Kurzschluß sofort den Schalter öffnen und einen hochohmigen Prüfzustand einstellen. Auf diese Art erkennen die Überwachungseinheiten zu jedem Zeitpunkt jeden Kurzschluß und steuern den Schalter entsprechend. Wird ein Kurzschluß behoben, steigt das Potential über den Prüfwiderstand auf den an die Überwachungseinheiten angeschlossenen Leiterabschnitten, so daß diese den Schalter der Trenneinheit wieder schließen, ohne daß das System neu eingeschaltet oder rückgesetzt werden muß.

In Systemen, die während der positiven Halbwelle niederohmig und während der negativen Halbwelle hochohmig belastet werden, wie beispielsweise in der DE Patentanmeldung 197 04 884.6 beschrieben, kann der Prüfwiderstand zweckmäßig stufenweise gesteuert werden. Dazu besteht das strombegrenzende Element aus mehreren in Reihe geschalteten ohmschen Widerständen, wobei einzelne Widerstände mit Hilfe von schaltenden Transistoren überbrückt werden. Damit lassen sich hochohmige und niederohmige Prüfwiderstände realisieren. Zuerst wird über einen hochohmigen Prüfwiderstand das Potential vom Eingang der Trenneinheit auf den Ausgang der Trenneinheit übertragen. Wird jetzt durch die Überwachungseinheit ein Kurzschluß festgestellt, bleibt der Schalter in der Trenneinheit geöffnet, d.h. die Transistoren im Schalter sind nichtleitend. Erst wenn ein Potential festgestellt wird, das über der zweiten Ansprechschwelle liegt und der Schalter geschlossen ist, wird der Prüfwiderstand auf einen niederohmigeren Wert umgeschaltet.

Mit einer Hysterese für die Ansprechschwelle des Steuertransistors der Überwachungseinheit wird eine Erhöhung der Erkennungssicherheit von Kurzschlüssen erreicht. Im Normalbetrieb bei geschlossenem Schalter ist die Ansprechschwelle höher, um bei einem Kurzschluß einen Potentialabfall schnell zu registrieren und den Schalter schnell zu öffnen. Bei geöffneten Schaltern ist die Ansprechschwelle niedriger, um über den hochohmigen Prüfwiderstand eine einwandfreie Prüfung auf Kurzschlüsse zu erreichen.

Es werden folgende unterschiedliche Arten von Kurzschlüssen erkannt:
- direkte (niederohmige) Kurzschlüsse zwischen den Leitungen,
- Kurzschlüsse über einen Widerstand zwischen den Leitungen, wobei die Größe des Widerstands von der Dimensionierung des Systems abhängt,
- Kurzschlüsse über Dioden mit der Anode an der Leitung mit dem höheren Potential und der Kathode an der Leitung mit dem niedrigeren Potential.

Durch ein solches Sicherungssystem wird sichergestellt, daß bei einem Kurzschluß, z.B. in der Zuleitung zu einem Abnehmer, eine Kommunikation zwischen anderen Abnehmern nicht behindert wird.

Mehrere Ausführungsbeispiele der Erfindung werden nachstehend anhand der Zeichnungen näher erläutert. Es zeigen:
Fig. 1 ein Blockschaltbild für den Einsatz von Trenneinheiten,
Fig. 2 ein Blockschaltbild mit Trenneinheit in der Leitung mit höherem Potential
Fig. 3 ein Blockschaltbild mit Trenneinheit in der Leitung mit niedrigerem Potential
Fig. 4 eine Schaltungsanordnung nach Figur 2
Fig. 5 eine Schaltungsanordnung, jedoch nur mit ausgangsseitiger Abtastung der Überwachungseinheit und einem Leistungstransistor im Schalter
Fig. 6 Schaltungsanordnung für Wechselspannungseinspeisung nach Figur 2 und 4 jedoch nur mit ausgangsseitiger Abtastung der Überwachungseinheit
Fig. 7 eine Schaltungsanordnung für Wechselspannungseinspeisung nach Figur 3 und 5 und ausgangsseitiger Abtastung der Überwachungseinheit
Fig. 8 eine Schaltungsanordnung für Wechselspannungseinspeisung, mit der Kurzschlüsse während der positiven und negativen Halbwelle erkannt werden.
Fig. 9 eine Schaltungsanordnung nach Figur 8 mit dem Schalter in der anderen Leitung, ergänzt um Elemente zur Erzeugung einer Hysterese für die Ansprechschwelle und zur stufenweisen Steuerung des Prüfwiderstandes

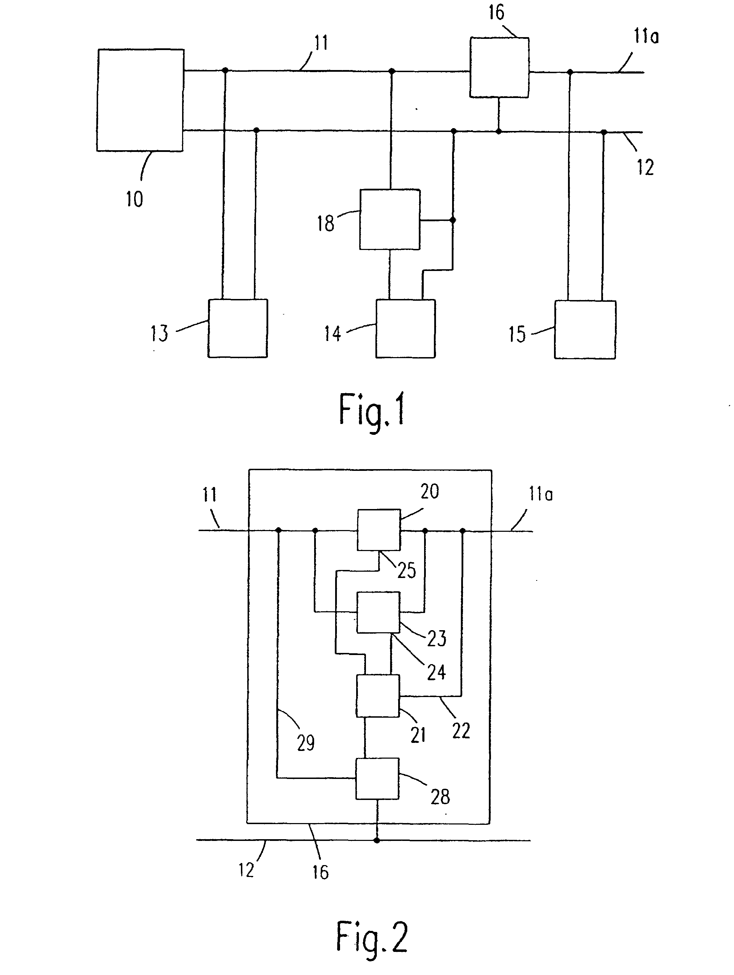

Figur 1 zeigt eine Anordnung zum Übertragen von Energie und/oder Daten. Der Generator 10 erzeugt eine Spannung, die in zwei Leiter 11, 12 eingespeist wird und mit der die angeschlossenen Stationen 13, 14, 15 ... mit Energie und/oder Daten versorgt werden. Trenneinheiten sind in den Leitungen 11 und 12 zur Unterbrechung ganzer Systemteile (Trenneinheit 16) oder in der Zuleitung zu einem Abnehmer zur Abtrennung nur dieses Abnehmers (Trenneinheit 18) vorgesehen. Mit 11a ist der Leiterabschnitt gekennzeichnet, der aus Sicht des Generators hinter der Trenneinheit liegt und im Kurzschluß- oder Überlastungsfall vom restlichen System mit allen an diesen Leiterabschnitt angeschlossenen Abnehmern getrennt wird.

Figur 2 zeigt ein Blockschaltbild für eine Trenneinheit 16 , die in die Leitung 11 eingefügt ist. Diese Trenneinheit 16 enthält einen Schalter 20, einen Prüfwiderstand 23 und die Überwachungseinheiten 21 und 28, wobei die Überwachungseinheit 28 mit der Überwachungseinheit 21 in Reihe geschaltet ist und die Verbindung zwischen dem Steuereingang 25 und der nicht unterbrochenen Leitung 12 herstellt. Mittels der Prüfleitung 22 der Überwachungseinheit 21 wird am Ausgang das Potential des Leiterabschnitts 11a des Schalters 20 und mittels der Prüfleitung 29 der Überwachungseinheit 28 das Potential des Leiterabschnitts 11 am Eingang des Schalters 20 geprüft. Der Prüfwiderstand 23 wird über den Steuereingang 24 von den Überwachungseinheiten 21 und 28 gesteuert. Diese Trenneinheit 16 kann bidirektional betrieben werden, d.h. die Generatorspannung kann an Leitung 11 und 12 oder an Leitung 11a und 12 angelegt werden. Deshalb enthält die Trenneinheit zwei Überwachungseinheiten, die das Potential auf dem Leitungsabschnitt 11 und 11a überprüfen.

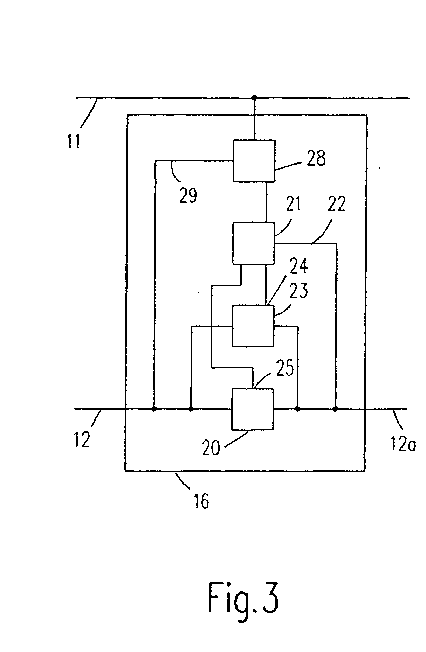

Fig. 3 zeigt eine entsprechende Anordnung für eine Trenneinheit 16 in der Leitung 12 mit den gleichen Komponenten wie in Fig. 2. Der Leiterabschnitt 12a wird im Kurzschluß- und Überlastungsfall durch den Schalter 20 abgetrennt. Leiter 11 ist in diesem Ausführungsbeispiel nicht unterbrochen.

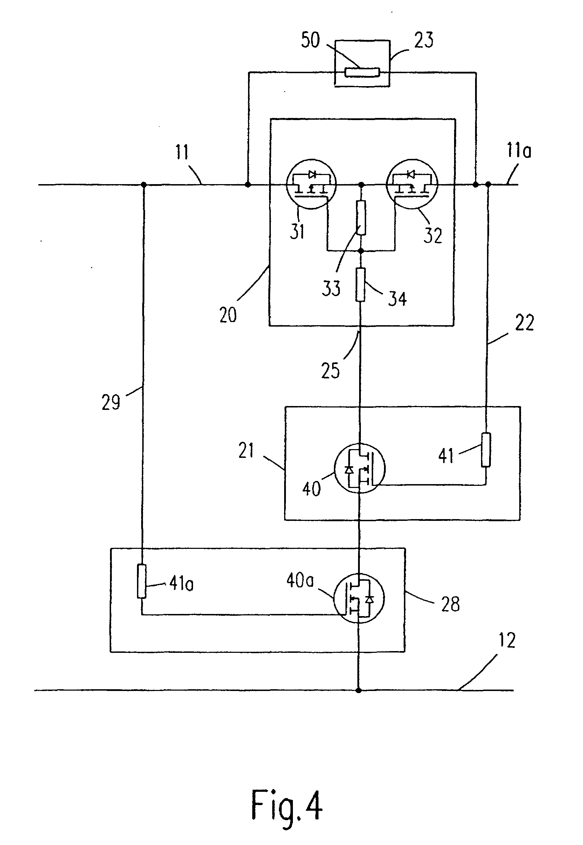

Figur 4 zeigt eine Schaltungsanordnung für eine Realisierung einer Trenneinheit nach Fig. 2, die für eine Gleichspannungsspeisung von beiden Seiten ausgelegt ist, wobei Leitung 11 ein höheres Potential als die Leitung 12 hat. Diese Anordnung enthält die p-Kanal Leistungstransistoren 31, 32 und die Widerstände 33, 34, die den Schalter 20 bilden und die n-Kanal Steuertransistoren 40 und 40a mit den Widerständen 41 und 41a, die Bestandteil der Überwachungseinheiten 21 und 28 sind. Der Prüfwiderstand 23, als strombegrenzendes, den Schalter 20 überbrückendes Element, wird in diesem Beispiel nicht gesteuert und enthält deshalb nur den einfachen ohmschen Widerstand 50. Eine Prüfleitung 22 der Überwachungseinheit 21 zum Ansteuern des Steuertransistors 40 tastet das Potential der Leitung 11a am Ausgang des Schalters 20 ab und eine weitere Prüfleitung 29 der Überwachungseinheit 28 tastet das Potential der Leitung 11 am Eingang, der bei Spannungseinspeisung an Leitungen 11a und 12 Ausgang des Schalters ist, des Schalters 20 ab, um über den Widerstand 41a den Steuertransistor 40a anzusteuern.

Der Schalter 20 ist in Leitung 11, die ein höheres Potential als Leitung 12 aufweist, eingefügt, d.h. bei einer positiven Versorgungsspannung in der Zuführung des positiven Potentials und bei einer negativen Versorgungsspannung in der Zuführung des Null-Potentials. Der Schalter 20 besteht aus den beiden Leistungstransistoren 31 und 32 und dem Spannungsteiler aus den Widerständen 33 und 34, der mit dem Steuereingang 25 verbunden ist. Nur wenn ein Potential, das niedriger als das Potential der Leitung 11 ist, am Steuereingang 25 anliegt, werden die Leistungstransistoren 31 und 32 leitend. Die Überwachungseinheit 21 ist mit der Überwachungseinheit 28 in Reihe geschaltet. Das Potential der Leitung 11 am Eingang des Schalters 20 wird bei geöffneten Leistungsschaltern 31 und 32 über den Prüfwiderstand 23 an den Ausgang des Schalters 20 zum Leitungsabschnitt 11a geführt. Die Potentiale an den Leitungsabschnitten 11 und 11a werden jeweils mit den Prüfleitungen 22 und 29 abgetastet und jeweils dem Steuereingang der Überwachungseinheiten 21 und 28 über die Widerstände 41 und 41a den Gates der Steuertransistoren 40 und 40 a zugeführt. Übersteigt das Potential an den Prüfleitungen 22 und 29 die Ansprechschwelle, wird der jeweilige Steuertransistor 40 und 40a in den Überwachungseinheiten 21 und 28 geschlossen. Vorausgesetzt beide Überwachungseinheiten schalten das Potential der Leitung 12 auf den Steuereingang 25 des Schalters 20 durch, werden durch den Spannungsabfall am Widerstand 33 die Leistungstransistoren 31 und 32 geschlossen. Damit ist der ungestörte Normalbetrieb der Trenneinheit erreicht. Wird die Trenneinheit an den Leitungen 11a und 12 an den Generator 10( Fig. 1) angeschlossen, erreicht das Potential bei Vorliegen eines Kurzschlusses zwischen den Leitungen 11 und 12 an der Prüfleitung 29 der Überwachungseinheit 28 nicht die Ansprechschwelle, die notwendig ist, um den Steuertransistor 40a zu schließen. Damit kann das Potential der Leitung 12 nicht zur Überwachungseinheit 21 durchgeschaltet werden. Der Schaltzustand der Überwachungseinheit 21 ist somit unerheblich. Der Schalter 20 wird oder bleibt geöffnet, da die Leistungstransistoren 31 und 32 nicht leitend sind. Liegt am Ausgang der Trenneinheit ein Kurzschluß oder eine Überlastung zwischen den Leitungen 11a und 12 beim Einschalten auf, unterschreitet das Potential, das über den Prüfwiderstand 23 zum Leiterabschnitt 11a geleitet wird, am Prüfeingang 22 der Überwachungseinheit 21 die Ansprechschwelle, die für das Schließen des Steuertransistors 40 erforderlich ist, und der Steuertransistor 40 der Überwachungseinheit 21 wird nichtleitend. Damit kann der Steuereingang 25 nicht mit der Überwachungseinheit 28 und dem Potential der Leitung 12 verbunden werden, und es kann sich die Spannung, die für das Schließen der Leistungsschalter 31 und 32 erforderlich ist, nicht einstellen, so daß die Leistungstransistoren 31 und 32 nichtleitend werden und der Schalter 20 geöffnet bleibt. Damit sind der speisende Generator 10 (Fig.1) und alle nicht an diesem Leiterabschnitt 11a liegenden Abnehmer vom Kurzschluß abgetrennt. Über die Verbindung des Prüfwiderstandes 23 ist ein Prüfzustand hergestellt. Wenn ein Kurzschluß während des Betriebs auftritt, sinkt das Potential auf der defekten Seite der Trenneinheit unter die Ansprechschwelle, und die entsprechende Überwachungseinheit 21 oder 28 erkennt in der oben beschriebenen Weise den Kurzschluß zwischen den Leitungen 11 und 12, und die Leistungstransistoren 31 und 32 im Schalter 20 werden nichtleitend. Wird der Kurzschluß oder die Überlastung aufgehoben, kann sich das Potential wieder über den Prüfwiderstand aufbauen und die Ansprechschwelle überschreiten, so daß die Steuertransistoren 40 und 40a das Potential der Leitung 12 wieder durchschalten und die Leistungstransistoren 31 und 32 leitend werden und der Schalter 20 geschlossen wird, wodurch der Normalbetrieb automatisch wieder hergestellt ist.

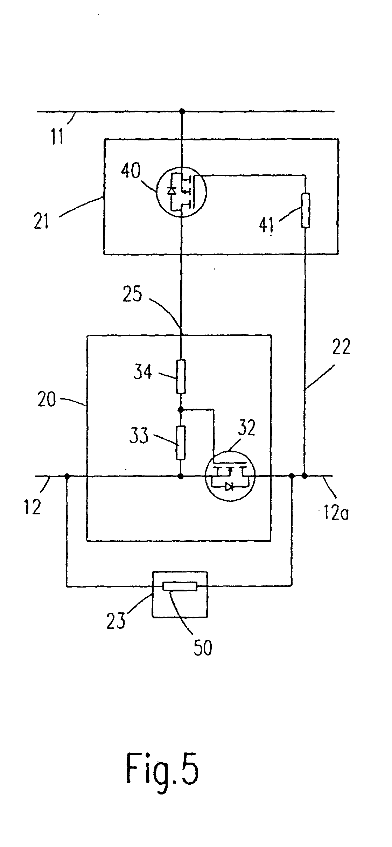

Fig. 5 zeigt eine Schaltungsanordnung für eine Gleichspannungseinspeisung nur an den Leitungen 11 und 12, gemäß der Anordnung nach Fig. 3. Der Leistungstransistor 32 im Schalter 20 ist vom Leitungstyp n-Kanal, und der Steuertransistor 40 der Überwachungseinheit 21 ist ein p-Kanal Transistor. In diesem Beispiel ist nur eine Abtastung der Leitung 12a am Ausgang des Schalters 20 dargestellt, d.h. diese Trenneinheit kann nicht an beiden Leitungsseiten an den Generator angeschlossen werden. Eine Überwachungseinheit für eine Abtastung der Leitung 12 vor dem Schalter 20 ist ebenfalls möglich, ist aber nicht dargestellt.

Diese würde wie im Beispiel von Figur 4 funktionieren. Die Trenneinheit ist in der Leitung 12 mit dem niedrigeren Potential angeordnet, also bei einer positiven Versorgungsspannung in der Zuführung des Null-Potentials und bei einer negativen Versorgungsspannung in der Zuführung des negativen Potentials. Auch in diesem Ausführungsbeispiel ist der Prüfwiderstand 23 nicht steuerbar und enthält nur einen ohmschen Widerstand 50. Nur wenn ein Potential, das höher als das Potential der Leitung 12 ist, an den Steuereingang 25 gelegt wird, leitet der n-Kanal-Leistungstransistor 32 im Schalter 20. Die Überwachungseinheit 21 enthält einen p-Kanal Steuertransistor 40, mit dem das Potential der Leitung 11 auf die Steuerleitung 25 durchgeschaltet wird. Das Durchschalten geschieht in Abhängigkeit von dem Potential am Leiterabschnitt 12a, welches mittels der Prüfleitung 22 am Ausgang des Schalters 20 abgetastet wird. Wird ein System nach Fig. 1 mit Trenneinheiten nach Fig. 5 eingeschaltet, wird das Potential der Leitung 12 am Eingang des Schalters 20 bei nichtleitendem Leistungstransistor 32 über den Prüfwiderstand 23 an den Ausgang des Schalters 20 geführt. Dieses Potential wird mit der Prüfleitung 22 abgetastet und an den Steuereingang des Steuertransistors 40 der Überwachungseinheit 21 geführt. Übersteigt das Potential eine Ansprechschwelle, wird der Steuertransistor 40 geschlossen. Dadurch wird der Steuereingang 25 des Schalters 20 mit dem Potential der Leitung 11 verbunden, welches den Leistungsschalter 32 in den leitenden Zustand versetzt und den Normalbetrieb der Trenneinheit einstellt. Tritt am Ausgang der Trenneinheit ein Kurzschluß oder eine Überlastung zwischen den Leitungen 11 und 12a auf, erreicht das Potential am Leiterabschnitt 12a nicht den Wert der Ansprechschwelle, der für das Schließen des Steuertransistors 40 erforderlich ist, und der Steuertransistor 40 bleibt nichtleitend. Damit ist der Steuereingang 25 nicht mehr mit dem Potential der Leitung 11 verbunden, und es kann sich die Spannung, die für das Schließen des Leistungstransistors 32 erforderlich ist, nicht einstellen. Damit ist die Gleichspannungsquelle 10 (Fig. 1) vom Kurzschluß abgetrennt. Über den Prüfwiderstand 23 wird der Prüfzustand hergestellt. Wenn ein Kurzschluß während des Betriebs auftritt, sinkt das Potential auf dem Leiterabschnitt 12a unter den Wert der Ansprechschwelle, der Steuertransistor 40 wird nichtleitend und der Schalter 20 unterbricht die Leitung 12. Wird der Kurzschluß zwischen den Leitungen 11 und 12a wieder aufgehoben, kann das Potential auf dem Leiterabschnitt 12a am Ausgang des Schalters 20 und damit an der Prüfleitung 22 der Überwachungseinheit 21 wieder einen Wert über der Ansprechschwelle zum Schließen des Steuertransistors 40 der Überwachungseinheit 21 annehmen und den Normalbetrieb automatisch wiederherstellen.

Für den bidirektionalen Betrieb der Trenneinheit, bei dem Eingang und Ausgang des Schalters 20 vertauschbar sind, werden Überwachungseinheiten 21 und 28 (Fig. 2 u.3) eingesetzt. Dabei bilden die beiden Steuertransistoren 40 und 40a (Fig. 4) der Überwachungseinheiten 21 und 28 eine UND-Verknüpfung. Nur wenn beide Steuertransistoren 40 und 40a leiten, können die Leistungstransistoren 31 und 32 auch leitend werden, womit Schalter 20 geschlossen ist.

Diese Ausführungsbeispiele für Gleichspannungseinspeisung erkennen alle drei erwähnten Kurzschlußarten einwandfrei, wobei im Falle eines Kurzschlusses über einen Widerstand der Wert des Widerstandes, der noch als Kurzschluß erkannt wird, von dem Wert des Prüfwiderstandes 23 und des Stromflusses im Normalbetrieb abhängt. Die Schaltungen gemäß Fig. 4 u. Fig. 5 können für den Betrieb mit einer Wechselspannung erweitert werden.

Bei einer Wechselspannung hat die Leitung 11 nur während der positiven Halbwelle das höhere Potential und Leitung 12 das niedrigere Potential, so daß die Leistungstransistoren 31 und 32 der Schalter gemäß Fig. 4 nur in der positiven Halbwelle leiten würden. Um eine Verbindung auch für die negative Halbwelle herzustellen, während der sich die Potentiale der beiden Leitungen 11 und 12 umkehren, könnten eigene Schalter 20 gemäß Fig. 4 für die negative Halbwelle vorgesehen werden. Eine andere Möglichkeit wird im folgenden dargestellt. Dabei ist ein Speicher zur Überbrückung der negativen Halbwelle vorgesehen.

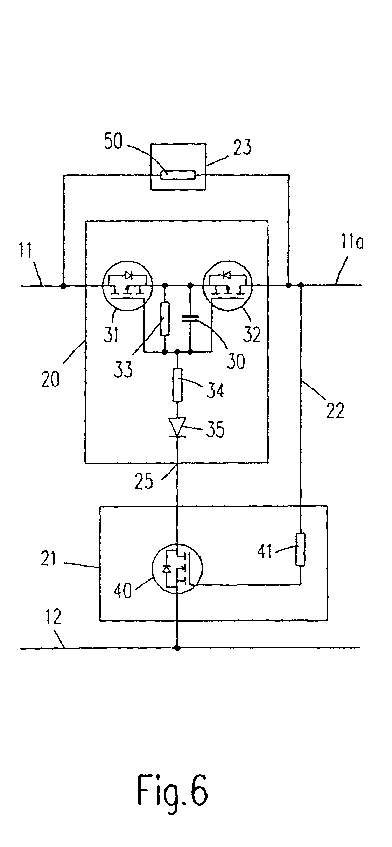

Fig.6 zeigt ein Ausführungsbeispiel für den Betrieb mit einer Wechselspannung, wobei die Funktion während der positiven Halbwelle der Wechselspannung der Funktionsweise für eine Gleichspannung, wie bei Fig. 2 beschrieben, gleichzusetzen ist. Diese Ausführung umfaßt die gleichen Komponenten wie das Ausführungsbeispiel von Fig. 2 und Fig. 4, jedoch wird hier nur eine Abtastung der Leitung 11a am Ausgang des Schalters 20 mit nur einer Überwachungseinheit 21 verwendet. Ergänzend dazu wird eine Kapazität 30 über den Widerstand 34 und die Diode 35 aufgeladen. Die Kapazität 30 ist zwischen dem Verbindungspunkt der beiden Sources der Leistungstransistoren 31 und 32 des Schalters 20 und dem Verbindungspunkt der zusammengeschalteten Gates der Leistungstransistoren 31 und 32 eingefügt. Parallel zur Kapazität 30 ist eine Entladungsstrecke in Form eines Widerstandes 33 geschaltet. Während der negativen Halbwelle der Wechselspannung, in der das Potential der Leitung 11 niedriger ist als das Potential der Leitung 12, verhindert die Diode 35 ein Umladen der Kapazität 30, so daß die erforderliche Spannung zum Schließen der Leistungsschalter 31 und 32 erhalten bleibt. Dabei ist die Entladung der Kapazität 30 über den Widerstand 33 so einzustellen, daß während der negativen Halbwelle keine zu große Änderung des Ladezustandes der Kapazität 30 auftritt. Ebenso wie bei Fig. 2 beschrieben, erkennt eine Überwachungsschaltung 21 einen Kurzschluß über die Prüfleitung 22. Im Falle eines Kurzschlusses wird der Steuertransistor 40 in der Überwachungsschaltung 21 nichtleitend, und die Kapazität 30 wird dadurch während der positiven Halbwelle nicht wieder aufgeladen. Aufgrund der Entladung über den Widerstand 33 verändert sich der Ladezustand der Kapazität 30, bis die Ausschaltschwelle der Leistungstransistoren 31 und 32 im Schalter erreicht ist und dieser öffnet. Damit ist der Generator 10 (Fig. 1) vom Kurzschluß abgetrennt und der Prüfzustand mit der Verbindung über den Prüfwiderstand 23 hergestellt. Wird der Kurzschluß zwischen den Leitungen 11a und 12 wieder aufgehoben, wird der Steuertransistor 40 leitend, und die Kapazität 30 wird erneut aufgeladen. Damit sind die Leistungsiransistoren 31 und 32 auch in der negativen Halbwelle wieder leitend.

Die Schaltungsanordnung aus Fig. 6 erkennt direkte Kurzschlüsse, Kurzschlüsse über Widerstände und Kurzschlüsse mit Dioden, die in der positiven Halbwelle wirksam sind, dagegen keine Kurzschlüsse mit Dioden, die in der negativen Halbwelle wirksam sind, d.h. mit der Anode an Leitung 12 und der Kathode an Leitung 11. Für diesen Fall wird später noch ein Ausführungsbeispiel angegeben.

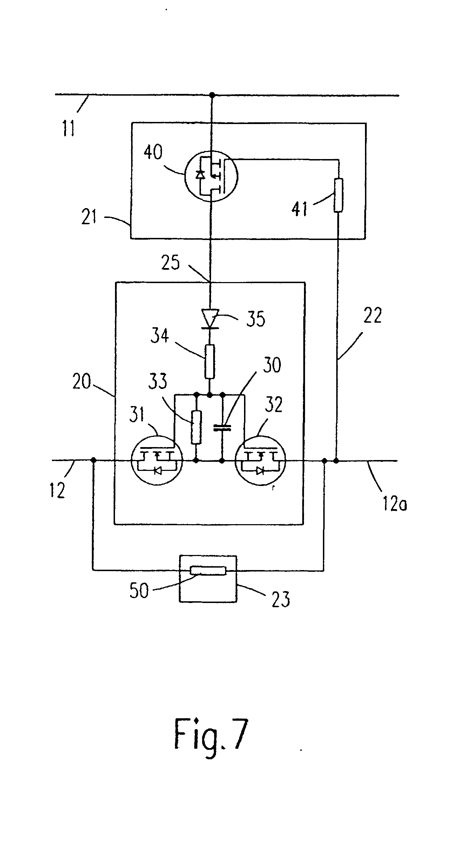

Fig. 7 zeigt ein Ausführungsbeispiel für eine Trenneinheit, die mit einer Wechselspannung betrieben wird, wobei der Schalter 20 in die Leitung 12 eingefügt ist, die während der positiven Halbwelle das niedrigere Potential führt. Die Funktion während der positiven Halbwelle der Wechselspannung ist der Funktionsweise für Gleichspannung gleichzusetzen (Fig. 3 u. 5). Zur Überbrückung des Schaltzustandes der Leistungsschalter 31 und 32 während der negativen Halbwelle ist die Beschreibung für Fig.6 entsprechend anzuwenden.

Auch die Anordnung der Fig. 7 erkennt keine Kurzschlüsse mit Dioden, die in der negativen Halbwelle der Wechselspannung wirksam sind.

Die in Fig. 6 und Fig. 7 beschriebenen Trenneinheiten können sinngemäß auch für die Erkennung von Kurzschlüssen in der negativen Halbwelle der Wechselspannung eingesetzt werden. Hierfür muß die Trenneinheit gemäß Fig. 6 in die Leitung 12 eingefügt werden, da diese während der negativen Halbwelle das höhere Potential führt, und die Trenneinheit gemäß Fig. 7 muß in die Leitung 11 eingefügt werden, da diese während der negativen Halbwelle das niedrigere Potential führt. Für diese Ausführungsbeispiele werden Kurzschlüsse mit einer Diode in der positiven Halbwelle nicht erkannt.

Die Beispiele der Fig. 6 und 7 haben jeweils nur eine Abtastung am Ausgang des Schalters 20. Die Schaltungen können jedoch mit einer Überwachungseinheit 28 zur Abtastung auch am Eingang des Schalters 20 nach Fig. 4 erweitert werden. Die Überwachungseinheiten sind dann in Reihe zu schalten.

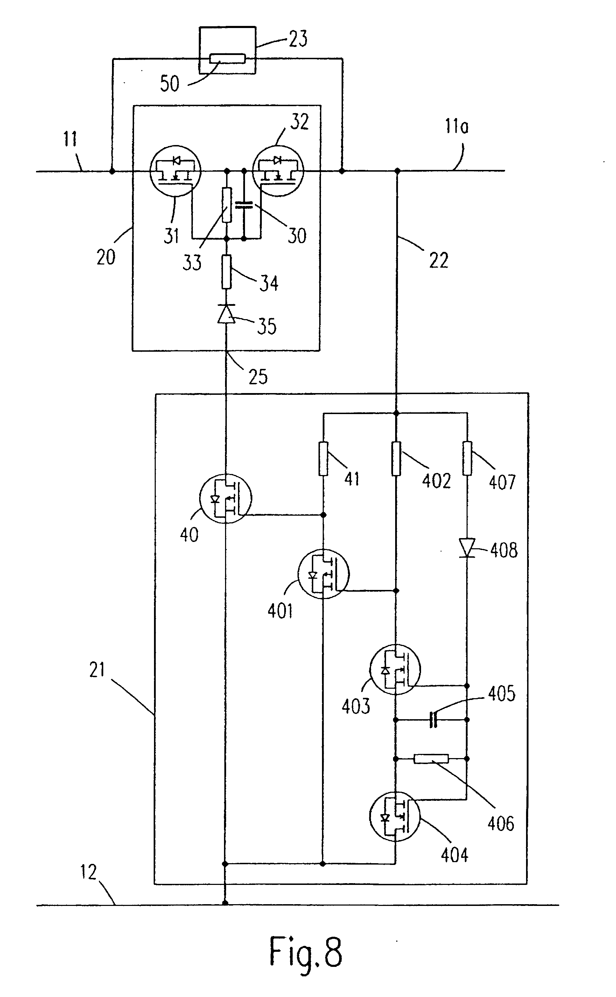

Fig. 8 zeigt ein Ausführungsbeispiel für Wechselspannungsbetrieb, bei dem während der positiven Halbwelle das Potential der Leitung 11 höher als das Potential der Leitung 12 ist und während der negativen Halbwelle das Potential der Leitung 11 niedriger als das Potential der Leitung 12 ist. Die Schaltung nach Fig.7 ist Grundlage für das Beispiel nach Fig.8. Im Ausführungsbeispiel nach Fig. 8 werden im Schalter 20 auch n-Kanal-Transistoren 31 und 32 verwendet. Der Steuertransistor 40 der Überwachungseinheit 21 ist wie in Fig. 7 ein p-Kanal-Transistor. Für die Überwachungseinheit 21 ohne die Elemente 401 bis 408 werden nur Kurzschlüsse in der negativen Halbwelle erkannt, da der Steuertransistor 40 mit einer negativen Gate-Source-Spannung angesteuert werden muß, um zu leiten. Um diese Überwachungseinheit 21 auch für Kurzschlüsse auszulegen, die nur in der positiven Halbwelle wirksam sind, ist die Überwachungseinheit 21 mit Schaltungsteilen 401 bis 408 ergänzt, die den Schalter 20 auch bei Kurzschlüssen in der positiven Halbwelle öffnen, d.h. bei Kurzschlüssen über Dioden, deren Anode mit Leitung 11 und deren Kathode mit Leitung 12 verbunden ist.

Der Schalter 20 enthält eine Kapazität 30 und eine Diode 35, um die für den leitenden Zustand der Leistungstransistoren 31 und 32 während der positiven Halbwelle erforderliche Ladung zu speichern. Die Überwachungseinheit 21 ist um eine Schaltung bestehend aus den Schaltern 401, 403 und 404, den Widerständen 402, 406 und 407, der Kapazität 405 und der Diode 408 ergänzt, um den Kurzschlußfall über eine Diode in der positiven Halbwelle zu erkennen und den Schalter 20 entsprechend zu steuern. Bei leitenden Leistungstransistoren 31 und 32 wird die Kapazität 405 während der positiven Halbwelle über den Stromweg Widerstand 407 -> Diode 408 -> Widerstand 406 -> Diode im Schalter 404 auf eine positive Spannung aufgeladen. Die Diode 408 verhindert eine Entladung während der negativen Halbwelle. Damit hält die Kapazität 405 eine Spannung, bei der die Schalter 403 und 404 schließen. Die Entladung über den Widerstand 406 während der negativen Halbwelle ist so bemessen, daß die Kapazität 405 sich nur geringfügig in einer Periodendauer entladen kann, während die Aufladung über den Widerstand 407 während der Dauer einer positiven Halbwelle geschehen kann. Die ständig geschlossenen Schalter 403 und 404 halten den Schalter 401 immer offen, so daß im Normalbetrieb der Steuertransistor 40 sinngemäß wie in der Schaltung nach Fig. 7 während der negativen Halbwelle funktioniert. Weil das Potential der Leitung 11 während der positiven Halbwelle höher ist als das Potential der Leitung 12, erhält der p-Kanal Steuertransistor 40 eine positive Gate-Source Spannung, wodurch dieser nicht leitet. Wird während der negativen Halbwelle das Potential der Leitung 11 niedriger als das Potential der Leitung 12, erhält der p-Kanal Transistor 40 eine negative Gate-Source Spannung, wodurch dieser leitend wird. In diesem Zustand kann die Kapazität 30 des Schalters 20 über den Stromweg Schalter 40 -> Diode 35 -> Widerstand 34 ->Widerstand 33 -> Diode im Leistungsschalter 32 und 31 geladen werden. Dadurch entsteht eine positive Gate-Source Spannung an den Leistungstransistoren 31 und 32, so daß beide leiten und der Schalter 20 schließt. Die Entladung der Kapazität 30 über den Widerstand 33 ist so bemessen, daß die Spannung an der Kapazität 30 sich nur geringfügig während einer Periodendauer ändert. Die Kapazität 30 wird über den Widerstand 34 während der Dauer einer negativen Halbwelle aufgeladen.

Kurzschlüsse, die sich während beider Halbwellen gleichartig auswirken, sind direkte (niederohmige) Kurzschlüsse und Kurzschlüsse über einen Widerstand zwischen den Leitungen 11 und 12, wobei die Größe des Widerstandes von der Dimensionierung der Trenneinheit abhängt. Tritt am Ausgang der Trenneinheit ein direkter Kurzschluß bzw. ein Kurzschluß über einen Widerstand zwischen den Leitungen 11 und 12 auf, bleibt der Steuertransistor 40, der normalerweise während der negativen Halbwelle geschlossen ist, geöffnet. Während der positiven Halbwelle ist der Steuertransistor 40 immer geöffnet. Damit ist der Steuereingang 25 zu keiner Zeit mehr mit dem Potential der Leitung 12 verbunden, und die Kapazität 30 wird über den Widerstand 33 entladen. Damit kann sich die positive Gate-Source-Spannung an den Leistungsschaltern 31 und 32 nicht aufbauen, so daß die Leistungstransistoren 31 und 32 nichtleitend werden. Damit ist die Quelle 10 (Fig. 1) vom Kurzschluß abgetrennt und der Prüfzustand mit der Verbindung über den Prüfwiderstand 23 hergestellt. Der Schaltungsteil mit den Schaltern 403, 404 und 401 ist für diese Art des direkten Kurzschlusses ohne Bedeutung. Für Kurzschlüsse, die sich nur in der negativen Halbwelle auswirken d.h. über Dioden mit der Anode an Leitung 12, die während der negativen Halbwelle das höhere Potential hat, und der Kathode an Leiterabschnitt 11a, der während der negativen Halbwelle das niedrigere Potential hat, ist dieselbe Situation wie im oben genannten Fall gegeben, da aufgrund des Kürzschlusses während der negativen Halbwelle der Steuertransistor 40 nichtleitend bleibt und während der positiven Halbwelle der Steuertransistor 40 immer nichtleitend ist. Für Kurzschlüsse, die sich nur in der positiven Halbwelle auswirken d.h. über Dioden mit der Anode an der Leitung 11, die während der positiven Halbwelle das höhere Potential hat, und der Kathode an der Leitung 12, die während der positiven Halbwelle das niedrigere Potential hat, wird die Kapazität 405 nicht über den Widerstand 407 und die Diode 408 aufgeladen. Die Kapazität 405 wird über den Widerstand 406 entladen und die Schalter 403 und 404 bleiben immer geöffnet. Während der positiven Halbwelle bleiben der Steuertransistor 40 und der Schalter 401 immer geöffnet oder sind nichtleitend. Beim Übergang zur negativen Halbwelle wird der Schalter 401 geschlossen, so daß der Steuertransistor 40 eine Gate-Source Spannung unterhalb seiner Einschaltschwelle erhält und damit auch während der negativen Halbwelle nichtleitend bleibt. Damit ist der Steuereingang 25 zu keiner Zeit mehr mit dem Potential der Leitung 12 verbunden und die Kapazität 30 wird über den Widerstand 33 entladen. Die Leistungstransistoren 31 und 32 sind nichtleitend und der Schalter 20 ist geöffnet. Damit ist die Quelle 10 (Fig.1) vom Kurzschluß abgetrennt und der Prüfzustand mit der einzigen Verbindung über den Prüfwiderstand 23 ist eingestellt. Für den Fall, daß ein Kurzschluß während des Betriebs auftritt, erkennt die Überwachungseinheit 21 in der oben beschriebenen Weise Kurzschlüsse zwischen den Leitungen 11a und 12 und die Leistungsschalter 31 und 32 des Schalters 20 werden schnell geöffnet. Wird der Kurzschluß zwischen den Leitungen 11a und 12 wieder aufgehoben, kann das Potential am Ausgang des Schalters 20 über den Prüfwiderstand 23 und damit an der Prüfleitung 22 der Überwachungseinheit 21 wieder einen Wert annehmen, bei dem der Steuertransistor 40 leitet und damit der Normalbetrieb automatisch wiederhergestellt ist.

Aufgrund der Anordnung des Schalters 20 in der Leitung 11, die nur während der negativen Halbwelle ein niedrigeres Potential als die Leitung 12 führt, werden mit dem Steuertransistor 40 der Überwachungseinheit 21 alle Kurzschlüsse erkannt, die während der negativen Halbwelle auftreten. Mit der Zusatzschaltung bestehend aus den Schaltern 404, 403 und 401 in der Überwachungseinheit 21 werden zusätzlich die Kurzschlüsse erkannt, die in der positiven Halbwelle auftreten.

Wird, im Gegensatz zur Darstellung in Fig. 8, der Schalter 20, bestehend aus n-Kanal Transistoren, in der Leitung 12, die nur während der positiven Halbwelle das niedrigere Potential führt, angeordnet und stellt die Überwachungseinheit 21 über den p-Kanal Steuertransistor 40 die Verbindung zur Leitung 11 her, werden mit dem Steuertransistor 40 der Überwachungseinheit 21 alle Kurzschlüsse erkannt, die während der positiven Halbwelle auftreten. Mit der Zusatzschaltung bestehend aus den Schaltern 404, 403 und 401 in der Überwachungseinheit 21 werden die zusätzlichen Kurzschlüsse erkannt, die in der negativen Halbwelle auftreten können.

Ebenso kann ein Ausführungsbeispiel für Wechselspannungen angegeben werden, bei dem das Prinzip der Schalteranordnung von Figur 6 zugrundegelegt wird. Der Schalter 20 enthält p-Kanal-Transistoren in Leitung 11 und der Steuertransistor 40 ist ein n-Kanal Transistor. Bei Anordnung des Schalters 20 in der Leitung 11, die nur während der positiven Halbwelle das höhere Potential führt, werden mit dem Steuertransistor 40 der Überwachungseinheit 21, der die Verbindung zur Leitung 12 herstellt, alle Kurzschlüsse erkannt, die während der positiven Halbwelle auftreten. Mit der Zusatzschaltung bestehend aus den Schaltern 404, 403 und 401 in der Überwachungseinheit 21 werden die zusätzlichen Kurzschlüsse erkannt, die in der negativen Halbwelle auftreten können. Hierbei sind dann die Schalter 31, 32, 404 und 403 als p-Kanal Transistoren und die Schalter 40 und 401 als n-Kanal Transistoren ausgeführt.

Wird der zwei p-Kanal Transistoren enthaltene Schalter 20 in Leitung 12 angeordnet, die nur während der negativen Halbwelle das höhere Potential führt, werden mit dem Steuertransistor 40 der Überwachungseinheit 21, der die Verbindung zur Leitung 11 herstellt, alle Kurzschlüsse erkannt, die während der negativen Halbwelle auftreten. Mit der Zusatzschaltung bestehend aus den Schaltern 404, 403 und 401 in der Überwachungseinheit 21 werden die zusätzlichen Kurzschlüsse erkannt, die in der positiven Halbwelle auftreten können. Hierbei sind dann die Schalter 31, 32, 404 und 403 als p-Kanal Transistoren und die Schalter 40 und 401 als n-Kanal Transistoren ausgeführt.

Die zuletzt genannten Ausführungsbeispiele erkennen alle drei erwähnten Kurzschlußarten einwandfrei, wobei im Falle eines Kurzschlusses über einen Widerstand der Wert des Widerstandes, der noch als Kurzschluß erkannt wird, von dem Wert des Prüfwiderstandes 50 und des Stromflusses im Normalbetrieb abhängt.

Eine weitere Möglichkeit zum Erkennen von Kurzschlüssen bei einer Wechselspannung und zum Steuern eines Leistungsschalters besteht darin, je eine Trenneinheit für die negative Halbwelle und die positive Halbwelle vorzusehen. Für die positive Halbwelle, in der das Potential der Leitung 11 höher ist als das Potential der Leitung 12, wird ein Schalter 20 gemäß Figur 6 in der Leitung 11 vorgesehen oder gemäß Figur 7 in der Leitung 12. Für die negative Halbwelle, in der das Potential der Leitung 11 niedriger ist als das Potential der Leitung 12, wird ein Schalter 20 gemäß Figur 6 in der Leitung 12 vorgesehen oder gemäß Figur 7 in der Leitung 11 angeordnet. Beide Trenneinheiten müssen in ihrer Funktion hintereinandergeschaltet werden, so daß die Daten oder Energie der Quelle 10 nur dann durchgeschaltet werden, wenn beide Trenneinheiten keinen Kurzschluß festgestellt haben. Diese Anordnung erfordert im Gegensatz zur Anordnung nach Figur 8 eine größere Anzahl von Leistungsschaltern.

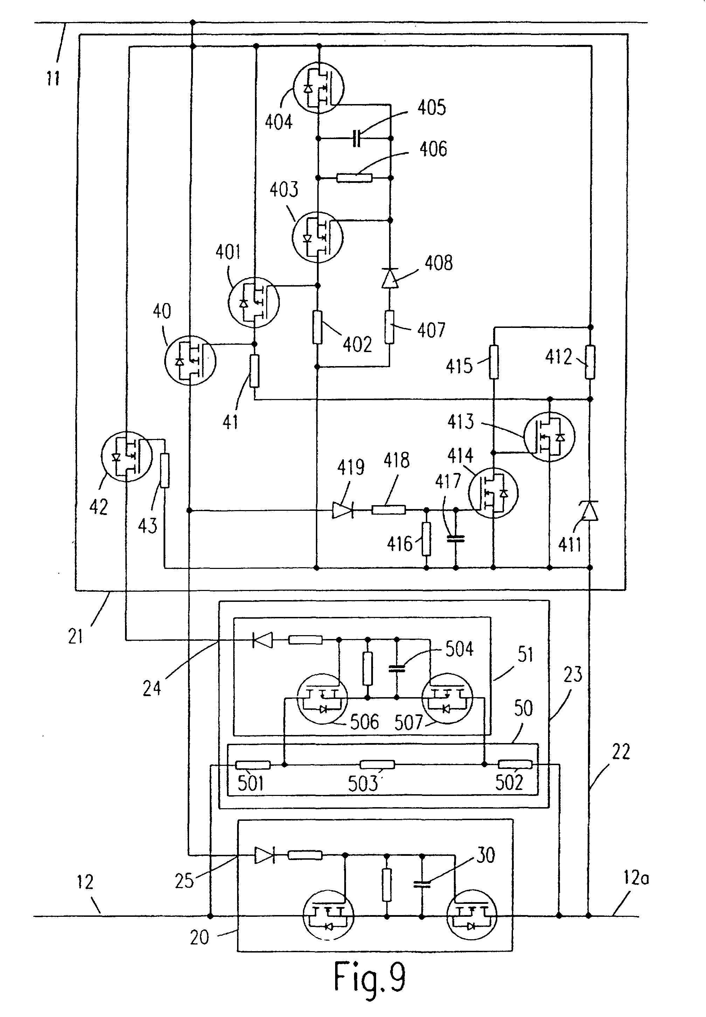

Figur 9 zeigt ein Ausführungsbeispiel, bei dem der Schalter 20 gemäß der Grundschaltung nach Figur 7 in der Leitung 12 angeordnet ist. Die Überwachungseinheit 21 erkennt mit dem Steuertransistor 40 demnach alle Kurzschlüsse, die während der positiven Halbwelle auftreten und mit den Schaltern 401, 403 und 404 die zusätzlichen Kurzschlüsse, die während der negativen Halbwelle auftreten. Zur Erhöhung der Erkennungssicherheit von Kurzschlüssen während der positiven Halbwelle ist eine Hysterese für die Ansprechschwelle des Steuertransistors 40 vorgesehen. Im Normalbetrieb der Trenneinheit bei geschlossenem Schalter 20 ist eine hohe Ansprechschwelle vorhanden, um schnell beim Absinken der Spannung am Ausgang der Trenneinheit, die mit der Prüfleitung 22 über den Widerstand 41 während der positiven Halbwelle abgetastet wird, den Schalter 20 öffnen zu können, um eine Überlastung der Quelle 10 (Fig.1) zu verhindern. Dagegen ist bei geöffnetem Schalter 20 eine kleine Ansprechschwelle vorhanden, damit über den hochohmigen Prüfwiderstand 23 eine einwandfreie Prüfung auf Kurzschlüsse während der positiven Halbwelle erreicht werden kann und nicht die normale Last von anderen Stationen im System einen Kurzschluß vortäuschen kann. Diese Hysterese wird mit den Schaltern 413 und 414 und der Zenerdiode 411 erreicht. Ist der Steuertransistor 40 während der positiven Halbwelle leitend, ist auch der Schalter 20 geschlossen. Diese Information wird genutzt, um den Schalter 414 geschlossen zu halten, indem sich die Kapazität 417 während der positiven Halbwelle über den Steuertransistor 40, die Diode 419 und den Widerstand 418 auflädt. Dieser Ladezustand wird während der negativen Halbwelle aufrechterhalten, da die Entladung über den Widerstand 416 so gering eingestellt ist, daß sich der Ladezustand kaum ändert. Durch den geschlossenen Schalter 414 wird der Schalter 413 geöffnet gehalten, und damit bestimmt die Zenerdiode 411 die Ansprechschwelle für das Schalten des Steuertransistor 40. Die Einstellung der Ansprechschwelle muß dabei gewährleisten, daß der Steuertransistor 40 während der positiven Halbwelle so lange geschlossen ist, daß die Kapazitäten 30 und 417 im Schalter 20 und in der Hysteresedefinitionsschaltung der Überwachungsschaltung 21 ausreichend geladen werden können. Ist der Steuertransistor 40 während der positiven Halbwelle nichtleitend, ist auch der Schalter 20 geöffnet, und es besteht nur eine Verbindung über den Prüfwiderstand 23 zwischen Eingang und Ausgang des Schalters 20. Diese Information wird genutzt, um die Ansprechschwelle für den Steuertransistor 40 während der positiven Halbwelle auf einen niedrigen Spannungswert einzustellen, indem die Kapazität 417 über den Widerstand 416 entladen wird und der Schalter 414 geöffnet wird. Dadurch wird der Schalter 413 während der positiven Halbwelle geschlossen, so daß die Zenerdiode 411 überbrückt wird.

Zur Verbesserung der Unterbrechungseigenschaften bei der Übertragung von Energie und/oder Daten durch die Schalter 20 darf der Prüfwiderstand 23 nicht zu niederohmig werden. Im Gegensatz dazu steht die Forderung, daß am Ausgang des Schalters eine Mindestspannungshöhe vorhanden sein muß, um sicher den Normalfall d.h. keinen Kurzschluß erkennen zu können. Bei großen Lasten d.h. niedrigem Lastwiderstand hinter dem Schalter muß der Prüfwiderstand entsprechend niederohmig gewählt werden. In Systemen, die während der positiven Halbwelle niederohmig und während der negativen Halbwelle hochohmiger belastet sind, besteht die Möglichkeit, den Prüfwiderstand 23 in der Größe je nach Situation abzustufen. Zu diesem Zweck wird während der negativen Halbwelle mit dem Schalter 42 der Überwachungsschaltung 21 über den Widerstand 43 und der Prüfleitung 22 der Zustand der Leitung 12a am Ausgang des Schalters abgetastet. Kann sich die negative Halbwelle normal aufbauen, wird der Schalter 42 geschlossen, und die Überbrückungskapazität 504 in der Steuereinheit 51 des Prüfwiderstandes 23 wird über den Steuereingang 24 geladen. Der Ladezustand bleibt während der positiven Halbwelle erhalten und hält damit den Schalter aus den Transistoren 506 und 507 in der Steuereinheit 51 dauernd geschlossen, so daß der Teilwiderstand 503 der Widerstandseinheit 50 überbrückt ist. Damit ist der niederohmige Anteil des Prüfwiderstandes 23, bestehend aus den Teilwiderständen 501 und 502, zwischen dem Eingang und dem Ausgang der Trenneinheit wirksam. Kann sich die negative Halbwelle nicht aufbauen, d.h. bei einem Kurzschluß zwischen den Leitungen 11 und 12a, wird der Schalter 42 nicht geschlossen, und damit kann auch der Schalter mit den Transistoren 506 und 507 in der Steuereinheit 51 des Prüfwiderstandes 23 nicht schließen, so daß der Teilwiderstand 503 nicht überbrückt wird. Damit ist die Summe der Teilwiderstände 501, 502 und 503 des Prüfwiderstandes 23 zwischen dem Eingang und dem Ausgang des Schalters 20 wirksam.

Durch diese Anordnung wird ein zweistufiges Einschalten der Trenneinheit erreicht, d.h. es wird zuerst während der negativen Halbwelle mit dem hochohmigen Prüfwiderstand 23 auf Kurzschlüsse geprüft. Damit werden direkte Kurzschlüsse, Kurzschlüsse über einen niederohmigen Widerstand und Kurzschlüsse über eine Diode, die mit der Anode an Leitung 12 und der Kathode an Leitung 11 verbunden ist, erkannt. Erst wenn solche Kurzschlüsse nicht vorliegen, wird auf einen niederohmigen Prüfwiderstand umgeschaltet, der es ermöglicht, einen Kurzschluß über eine Diode, die mit der Anode an Leitung 11 und mit der Kathode an Leitung 12 verbunden ist, während der positiven Halbwelle zu erkennen. Wenn der Schalter 20 geöffnet ist, besteht eine hochohmige Verbindung zwischen dem Eingang und dem Ausgang des Schalters 20 während der positiven Halbwelle über den Prüfwiderstand 23, d.h. eine gute Entkopplung des noch funktionsfähigen Systems von Systemteilen, die durch den Kurzschluß betroffen sind. Die Summe der Teilwiderstände 501, 502 und 503 des Prüfwiderstandes 23 wird so bemessen, daß für die hochohmige negative Halbwelle ein genügend großes Signal am Ausgang des Schalters 20 entsteht, so daß zwischen dem Normalbetrieb und einem vorhandenen Kurzschluß sicher unterschieden werden kann. Ebenso muß die Summe der Teilwiderstände 501 und 502 so bemessen sein, daß zwischen Normalbetrieb und Kurzschluß während der positiven Halbwelle sicher unterschieden werden kann.

In diesen Ausführungsbeispielen wurden n-Kanal und p-Kanal Transistoren in den Überwachungseinheiten 21 und 28 zum Erkennen eines Kurzschlusses und zum Schalten des Steuereinganges des Schalters 20 eingesetzt. Der Einsatz solcher Transistoren stellt nur eine Art der Realisierung dar, mit der einfach und zuverlässig ein Kurzschluß erkannt werden kann. Andere Möglichkeiten ergeben sich durch den Einsatz von z.B. Spannungskomparatoren und ähnlichen Bauteilen. Die Schalter können ebenfalls mit Bipolartransistoren aufgebaut werden.

## Patentansprüche

1. Anordnung zum Übertragen von Daten und/oder Energie über Leiter (11,12), von denen wenigstens ein Leiter (11) durch wenigstens eine Trenneinheit (16) in einen ersten und einen zweiten Leiterabschnitt (11,11a) unterteilt ist, wobei jede Trenneinheit (16) wenigstens eine Überwachungseinheit (21,28) enthält,
**dadurch gekennzeichnet, daß** die Überwachungseinheit (21,28) an wenigstens einen Leiterabschnitt angeschlossen ist und eingerichtet ist, einen Schalter (20) zu betätigen, wenn auf wenigstens einem der angeschlossenen Leiterabschnitte (11,11a) eine Spannung eine erste Ansprechschwelle unterschreitet oder eine zweite Ansprechschwelle überschreitet, und daß der Schalter (20) durch ein strombegrenzendes Element (23) überbrückt ist.

2. Anordnung nach Anspruch 1,
**dadurch gekennzeichnet, daß** der von der Überwachungseinheit angesteuerte Schalter die durch ihn unterteilte Leitung unterbricht, wenn die Spannung die erste Ansprechschwelle unterschreitet, und verbindet, wenn die Spannung die zweite Ansprechschwelle überschreitet.

3. Anordnung nach Anspruch 1 bis 2, **dadurch gekennzeichnet, daß**
der Schalter wenigstens einen Feldeffekttransistor enthält, der mit der wenigsten einen Überwachungseinheit gekoppelt ist.

4. Anordnung nach Anspruch 1 oder 2,
**dadurch gekennzeichnet, daß** der Schalter für die Leitung eines Stroms in beiden Richtungen ausgebildet ist.

5. Anordnung nach Anspruch 4,
**dadurch gekennzeichnet, daß** eine Überwachungseinheit einen dritten Feldeffekttransistor enthält, der zwischen den nicht unterteilten Leiter und einen Steuereingang des Schalters geschaltet ist und dessen Gate mit einem Leiterabschnitt gekoppelt ist, wobei bei Verwendung von mehreren Überwachungseinheiten die zugehörigen dritten Feldeffekttransistoren in Reihe zwischen nicht unterteilten Leiter und Steuereingang geschaltet sind.

6. Anordnung nach Anspruch 5, wobei der mit den Überwachungseinheiten gekoppelte Leiter eine Wechselspannung führt,
**dadurch gekennzeichnet, daß** der Schalter einen ersten und einen zweiten Feldeffekttransistor mit gleichem Leitungstyp enthält, die in Reihe zwischen beide Leiterabschnitte geschaltet sind und deren Gate miteinander verbunden und mit den Überwachungseinheiten gekoppelt sind.

7. Anordnung nach Anspruch 6, wobei der mit der Überwachungseinheit gekoppelte Leiter eine Wechselspannung führt,
**dadurch gekennzeichnet, daß** die Gates des ersten und des zweiten Feldeffekttransistors über eine Kapazität und eine dazu parallel geschaltete Entladungsstrecke mit einem Verbindungspunkt zwischen den in Reihe geschalteten ersten und zweiten Feldeffekttransistor und über eine Diode mit dem dritten Feldeffekttransistor verbunden sind.

8. Anordnung nach Anspruch 7 **dadurch gekennzeichnet, daß** die Kapazität im Schalter die notwendige Ladung für ein Schließen des ersten und zweiten Feldeffekttransistors in der zur Ansprechschwelle entgegengesetzten Halbwelle der Wechselspannung speichert.

9. Anordnung nach einem der Ansprüche 7 bis 8 **dadurch gekennzeichnet, daß** der Leitungstyp des ersten und zweiten Feldeffekttransistors entgegengesetzt zum Leitungstyp des dritten Feldeffekttransistors ist und der Leitungstyp der Feldeffekttransistoren festlegt, in welcher Halbwelle der Wechselspannung die Ansprechschwelle für die Überwachungseinheit liegt.

10. Anordnung nach einem der Ansprüche 7 bis 9 **dadurch gekennzeichnet, daß** die Überwachungseinheit mit zusätzlichen Schaltungsteilen versehen ist, die bei Überlastung in der nicht durch die Ansprechschwellen überwachten Halbwelle den dritten Feldeffekttransistor sperren.

11. Anordnung nach Anspruch 1 **dadurch gekennzeichnet, daß** die Anprechschwelle der Überwachungseinheit eine Hysterese aufweist, wobei bei geschlossenen Schaltern die Ansprechschwelle hoch und bei geöffneten Schaltern die Ansprechschwelle niedrig ist.

12. Anordnung nach Anspruch 1 **dadurch gekennzeichnet, daß** das strombegrenzende Element Prüfwiderstände enthält, die zwischen einem hochohmigen Zustand und einem niederohmigen Zustand umschaltbar sind.

13. Anordnung nach Anspruch 12 **dadurch gekennzeichnet, daß** bei geöffnetem Schalter in einem Leiter der hochohmige Prüfwiderstand eingestellt ist und bei geschlossenem Schalter der Prüfwiderstand durch Überbrücken von Teilwiderständen niederohmiger ist.

## Claims

1. A device for the transmission of data and/or energy via conductors (11, 12), at least one conductor (11) of which is subdivided into a first and a second conductor segment (11, 11a) by at least one disconnecting unit (16), each disconnecting unit (16) including at least one monitoring unit (21, 28), **characterized in that** the monitoring unit (21, 28) is connected to at least one conductor segment and is arranged to actuate a switch (20) when a voltage on at least one of the connected conductor segments (11, 11a) drops below a first actuation threshold or exceeds a second actuation threshold, and that the switch (20) is bridged by a current-limiting element (23).

2. A device as claimed in claim 1, **characterized in that** the switch controlled by the monitoring unit interrupts the conductor segmented thereby when the voltage drops below the first actuation threshold and connects it when the voltage exceeds the second actuation threshold.

3. A device as claimed in claim 1 or 2, **characterized in that** the switch includes at least one field effect transistor which is coupled to at least one monitoring unit.

4. A device as claimed in claim 1 or 2, **characterized in that** the switch is arranged to conduct a current in both directions.

5. A device as claimed in claim 4, **characterized in that** a monitoring unit includes a third field effect transistor which is connected between the non-segmented conductor and a control input of the switch and whose gate is coupled to a conductor segment, the associated third field effect transistors being connected in series between non-segmented conductor and control input in case several monitoring units are used.

6. A device as claimed in claim 5, in which the conductor coupled to the monitoring units carries an AC voltage, **characterized in that** the switch includes a first and a second field effect transistor of the same conductivity type which are connected in series between the two conductor segments, their gates being interconnected and coupled to the monitoring units.

7. A device as claimed in claim 6, in which the conductor coupled to the monitoring unit carries an AC voltage, **characterized in that** the gates of the first and the second field effect transistor are connected, via a capacitance and a discharging path connected parallel thereto, to a junction of the series-connected first and second field effect transistors and, via a diode, to the third field effect transistor.

8. A device as claimed in claim 7, **characterized in that** the capacitance in the switch stores the charge required for closing the first and the second field effect transistor during the half-wave of the AC voltage which opposes the actuation threshold.

9. A device as claimed in claim 7 or 8, **characterized in that** the type of conductivity of the first and the second field effect transistor opposes the type of conductivity of the third field effect transistor, the type of conductivity of the field effect transistors defining the half-wave of the AC voltage in which the actuation threshold for the monitoring unit is situated.

10. A device as claimed in any one of claims 7 to 9, **characterized in that** the monitoring unit is provided with additional circuit components which turn off the third field effect transistor in the case of overloading during the half-wave which is not monitored by the actuation thresholds.

11. A device as claimed in claim 1, **characterized in that** the actuation threshold of the monitoring unit exhibits hysteresis, the actuation threshold being high in the case of closed switches and low in the case of open switches.

12. A device as claimed in claim 1, **characterized in that** the current-limiting element includes test resistors which are switchable between a high-ohmic state and a low-ohmic state.

13. A device as claimed in claim 12, **characterized in that** in the open state of the switch in a conductor the high-ohmic test resistor is adjusted, whereas in the case of a closed switch the test resistor is more low-ohmic due to the bridging of sub-resistors.

## Revendications

1. Dispositif pour la transmission de données et/ou d'énergie par l'intermédiaire de conducteurs (11, 12) dont au moins un conducteur (11) est subdivisé par au moins une unité séparatrice (16) en des premier et deuxième segments conducteurs (11, 11a), chaque unité séparatrice (16) contenant au moins une unité de surveillance (21, 18),
**caractérisé en ce que** l'unité de surveillance (21, 28) est raccordée à au moins un segment conducteur et conçue pour actionner un commutateur (20) lorsqu'une tension passe sous un premier seuil de réponse ou dépasse un deuxième seuil de réponse sur au moins un des segments conducteurs (11, 11a) raccordés et que le commutateur (20) est ponté par un élément (23) limiteur de courant.

2. Dispositif selon la revendication 1, **caractérisé en ce que** le commutateur commandé par l'unité de surveillance interrompt la ligne séparée par lui lorsque la tension passe sous le premier seuil de réponse et la relie lorsque la tension passe au-delà du deuxième seuil de réponse.

3. Dispositif selon l'une des revendications 1 à 2, **caractérisé en ce que** le commutateur contient au moins un transistor à effet de champ qui est couplé à au moins une unité de surveillance.

4. Dispositif selon l'une des revendications 1 ou 2, **caractérisé en ce que** le commutateur est conçu pour la conduction d'un courant dans les deux directions.

5. Dispositif selon la revendication 4, **caractérisé en ce qu'**une unité de surveillance contient un troisième transistor à effet de champ qui est monté entre le conducteur non subdivisé et une entrée de commande du commutateur et dont la grille est couplée à un segment conducteur, les troisièmes transistors à effet de champ correspondants étant montés en série entre le conducteur non subdivisé et l'entrée de commande en cas d'utilisation de plusieurs unités de surveillance.

6. Dispositif selon la revendication 5, le conducteur couplé aux unités de surveillance guidant une tension alternative,
**caractérisé en ce que** le commutateur contient des premier et deuxième transistors à effet de champ avec le même type de ligne qui sont montés en série entre deux segments conducteurs et dont les grilles sont reliées entre elles et couplées avec les unités de surveillance.

7. Dispositif selon la revendication 6, le conducteur couplé à l'unité de surveillance conduisant une tension alternative,
**caractérisé en ce que** les grilles des premier et deuxième transistors à effet de champ sont reliées par l'intermédiaire d'une capacité et d'un segment de décharge monté en parallèle à un point de liaison entre les premier et deuxième transistors à effet de champ montés en série et par l'intermédiaire d'une diode au troisième transistor à effet de champ.

8. Dispositif selon la revendication 7, **caractérisé en ce que** la capacité dans le commutateur emmagasine la charge nécessaire pour une fermeture des premier et deuxième transistors à effet de champ dans la demi-onde de tension alternative opposée au seuil de réponse.

9. Dispositif selon l'une des revendications 7 à 8, **caractérisé en ce que** le type de ligne des premier et deuxième transistors à effet de champ est opposé au type de ligne du troisième transistor à effet de champ et le type de ligne des transistors à effet de champ détermine dans quelle demi-onde de la tension alternative se trouve le seuil de réponse pour l'unité de surveillance.

10. Dispositif selon l'une des revendications 7 à 9, **caractérisé en ce que** l'unité de surveillance est dotée d'éléments de circuit supplémentaires qui, en cas de surcharge dans la demi-onde non surveillée par les seuils de réponse, bloquent le troisième transistor à effet de champ.

11. Dispositif selon la revendication 1, **caractérisé en ce que** le seuil de réponse de l'unité de surveillance présente une hystérésis, le seuil de réponse étant élevé en cas de commutateurs fermés et faible en cas de commutateurs ouverts.

12. Dispositif selon la revendication 1, **caractérisé en ce que** l'élément limiteur de courant contient des résistances de contrôle qui peuvent être commutées entre un état à haute impédance et un état à faible impédance.

13. Dispositif selon la revendication 12, **caractérisé en ce qu'**en cas de commutateur ouvert dans un conducteur, la résistance de contrôle est réglée à haute impédance et en cas de commutateur fermé, la résistance de contrôle est à plus faible impédance par pontage des résistances partielles.
